Europäisches Patentamt

European Patent Office

Office européen des brevets

(19)

(11) Veröffentlichungsnummer: **0 226 571**
**A2**

(12) **EUROPÄISCHE PATENTANMELDUNG**

(21) Anmeldenummer: **86890335.2**

(22) Anmeldetag: **09.12.86**

(51) Int. Cl.⁴: **B 60 C 27/06**
**B 60 C 27/10**

(30) Priorität: **09.12.85 AT 3558/85**

(43) Veröffentlichungstag der Anmeldung:
**24.06.87 Patentblatt 87/26**

(84) Benannte Vertragsstaaten:
**AT BE CH DE ES FR GB GR IT LI LU NL SE**

(71) Anmelder: **Glinzner, Wilhelm**
**Krottenbachstrasse 247/4/1**
**A-1190 Wien (AT)**

**Dietl, Ernst**
**Seestrasse 19**
**A-3224 Mitterbach (AT)**

(72) Erfinder: **Glinzner, Wilhelm**
**Krottenbachstrasse 247/4/1**
**A-1190 Wien (AT)**

**Dietl, Ernst**
**Seestrasse 19**
**A-3224 Mitterbach (AT)**

(74) Vertreter: **Müllner, Erwin, Dr. et al**
**Patentanwälte Dr. Erwin Müllner, Dipl.-Ing. Werner**
**Katschinka Weihburggasse 9**
**A-1010 Wien (AT)**

(54) **Schneekette.**

(57) Es ist Aufgabe der Erfindung, eine Schneekette zu schaffen, die in einem Schritt montiert werden kann, die also nicht nachgespannt zu werden braucht. Die Schneekette (1) ist auf L-förmigen Bügeln (2, 3) montiert, die auf einer Grundplatte (16) drehbar gelagert sind. Durch Auseinanderfächern der Bügel (2, 3) wird die Schneekette in die in Fig. 1 dargestellte Lage auf das auf dem Boden stehende Rad (4) gebracht. Anschließend wird die erfindungsgemäß vorgesehene Federeinrichtung gespannt, wodurch die Bügel (2) gegeneinander in Richtung Pfeil (5) vorgespannt werden. Wenn man mit dem Fahrzeug losfährt, wird die Kette durch die Federeinrichtung automatisch gespannt.

Die Federeinrichtung besteht vorzugsweise aus einem verschiebbaren Balken (12), an dem zwei Zugfedern (7) befestigt sind. Die anderen Enden der Zugfedern sind mittels Seilen (15), die über Umlenkrollen (8) geführt sind, mit den Bügeln (2) verbunden.

*Fig. 1*

**Beschreibung**

Schneekette

Die Erfindung betrifft eine Schneekette mit einer inneren und einer äußeren Seitenkette und im wesentlichen L-förmigen Bügeln, wobei die innere und die äußere Seitenkette an den Enden und gegebenenfalls auch im Verlauf ihrer Länge jeweils an einem Schenkel eines Bügels befestigt ist.

Schneeketten dieser Bauart, aber auch alle anderen bekannten Schneeketten müssen - wenn sie das Rad entlang dessen gesamten Umfang umspannen sollen - in zwei Etappen montiert werden.

Zuerst wird die Kette über das Rad gehängt und die freien Enden werden miteinander verbunden. Da das Rad auf dem Boden steht, bleibt ein Teil des Rades, nämlich die Auflagefläche des Rades auf dem Boden, zunächst frei von der Schneekette. Anschließend fährt man einige Radumdrehungen weit, bis sich die Schneekette gleichmäßig entlang des Radumfanges verteilt hat. Dann muß man wieder aussteigen und die Kette nachspannen.

Wird die Kette jedoch so dimensioniert, daß sie das Rad nicht entlang dessen gesamten Umfang umspannt, könnte sie in einem Schritt montiert werden. Solche Schneeketten sind jedoch beim Bremsen sehr gefährlich, weil sich das Rad solange dreht, bis die Stelle ohne Schneekette den Boden berührt, und dann blockiert. Eine Schneekette, die das Rad nicht vollständig umspannt, ist somit für das Bremsen wertlos.

Aus der CH-PS 556 251 ist bereits bekannt, die eigentliche Schneekette mit im wesentlichen L-förmigen Bügeln zu verbinden, um die Montage zu erleichtern und ein "Verheddern" zu verhindern. Es hat jedoch auch diese Schneekette die oben erwähnten Nachteile, insbesondere muß sie in zwei Etappen montiert werden.

Es ist Aufgabe der vorliegenden Erfindung, eine Schneekette zu schaffen, die in einem Schritt montierbar ist und die das Rad vollständig umspannt.

Diese Aufgabe wird durch eine Schneekette der eingangs genannten Art erfindungsgemäß dadurch gelöst, daß die Bügel mit ihrem anderen Schenkel an einer Grundplatte drehbar befestigt sind und daß die Bügel, an denen die Enden der Seitenketten befestigt sind, mittels einer Federeinrichtung gegeneinander vorspannbar sind.

Die Montage der erfindungsgemäßen Schneekette erfolgt auf folgende Weise:

Die Bügel werden zusammengeklappt und mit dem Schenkel, an dem die Seitenketten befestigt sind, auf das Rad gelegt. Dann werden die Bügel auseinandergefächert, bis die äußeren Bügel, das sind die Bügel, an denen die Enden der Seitenketten befestigt sind, den Boden berühren. Anschließend werden diese beiden Bügel mit der Federeinrichtung vorgespannt. Nach diesen wenigen Handgriffen kann die Fahrt fortgesetzt werden. Während der nächsten Radumdrehungen verteilt sich die Schneekette gleichmäßig am Reifen und spannt sich auch selbsttätig durch die Federeinrichtung. Ein Nachspannen der Schneekette erübrigt sich.

Die Scheekette ist für alle Arten von Fahrzeugen geeignet, die eine Gleitschutzvorrichtung benötigen, vom Leichtfahrzeug bis zum Schwerfahrzeug. Besonders wenn die Schneekette für Schwerfahrzeuge verwendet wird, ist es zweckmäßig, wenn an den Bügeln, an denen die Enden der Seitenketten befestigt sind, ein automatischer Verschluß vorgesehen ist der die Bügel zusätzlich miteinander verbindet, wenn sie einander berühren. Dadurch ist die Schneekette selbst bei sehr großen Antriebskräften sicher auf dem Reifen befestigt. Bei Leichtfahrzeugen ist dieser Verschluß unter Umständen entbehrlich, selbst dann, wenn die Antriebskraft über der Kraft der Federeinrichtung liegt, weil die Kette auch durch das Profil des Reifens am Verrutschen gehindert wird.

Es ist vorteilhaft, wenn die Bügel, an denen die Enden der Seitenketten befestigt sind, länger als die anderen Bügel sind, sodaß in montiertem Zustand die Lagerung der Bügel auf der Grundplatte außerhalb der Radmitte liegt. Es wird dadurch erreicht, daß beim Montieren der Schneekette die Bügel während des Auffächerns nicht direkt am Reifen anliegen, sodaß sich die Schneekette nicht so leicht im Reifenprofil verfangen kann. Erst in montiertem Zustand liegen die Bügel am Reifen an.

Nach einer Ausführungsform der Erfindung besteht die Federeinrichtung aus einem verschiebbaren Balken, an dem zwei Zugfedern befestigt sind, zwei auf der Grundplatte drehbar gelagerte Rollen und zwei auf den Bügeln, an denen die Enden der Seitenketten befestigt sind, befestigten Verankerungen für Seile, wobei diese Seile einerseits mit den freien Enden der Zugfedern verbunden sind und anderseits über die Umlenkrollen mit den jeweils am entsprechenden Bügel befestigten Verankerungen verbindbar sind. Durch Verschiebung des Balkens werden die Zugfedern gespannt. Wenn zuvor die Seile mit den entsprechenden Verankerungen über die Rollen verbunden wurden, werden somit die Bügel von der Federeinrichtung gegeneinander vorgespannt.

Die Verschiebung des Balkens kann dadurch erfolgen, daß der Balken eine feste Mutter aufweist, in die eine Spindel eingreift. Durch Drehen der Spindel, was durch ein Kardangelenk erleichtert werden kann, wird der Balken verschoben.

Nach einer anderen Ausführungsform der Erfindung ist der Balken mit einer Zahnstange verbunden, in die ein Zahnrad eingreift. In diese Fall kann durch Drehen des Zahnrades die Zahnstange samt Balken verschoben werden. Gemäß weiteren Ausführungsformen der Erfindung ist der Balken durch einen Flaschenzug oder mittels eines Spannbügels über einen Seilzug verschiebbar.

Es ist zweckmäßig, wenn der Balken in der gespannten Position durch eine Arretiervorrichtung sicherbar ist. Bei Verwendung einer Spindel kann sich zwar im Normalfall der Balken nicht ungewollt verschieben, jedoch ist es durch die ständigen Vibrationen während der Fahrt doch möglich, daß sich ohne Arretiervorrichtung die Spindel dreht und somit die Vorspannung nachläßt. Außerdem wird durch die Arretiervorrichtung die Spindel bzw. Zahnstange entlastet.

Anhand der Fig. 1 bis 7 wird die Erfindung näher erläutert. Fig. 1 zeigt die erfindungsgemäße Schneekette während des Anlegens; Fig. 2 bis 6 zeigen schematisch die verschiedenen Lagen der Schneekette während des Anlegens; Fig. 7 zeigt die Federeinrichtung gemäß der Erfindung.

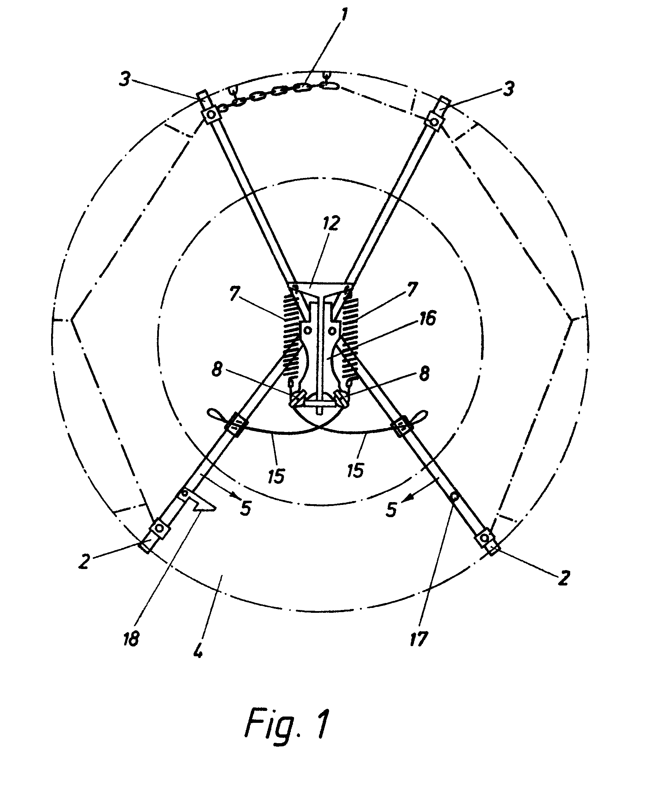

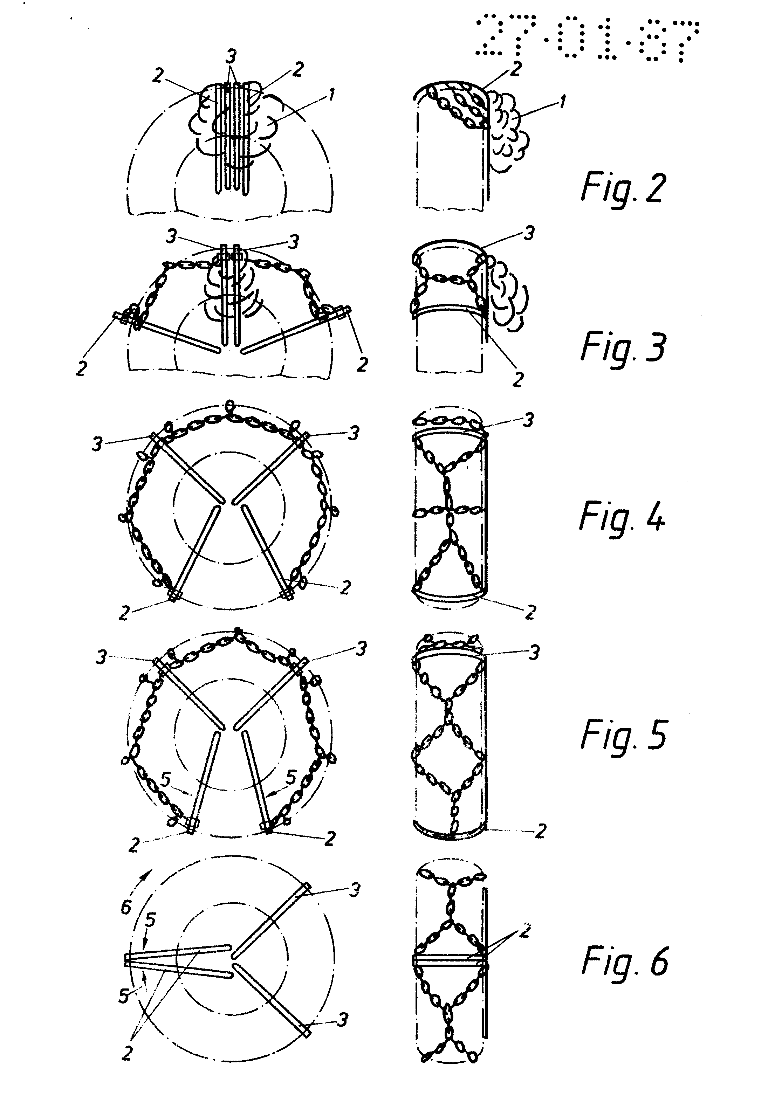

In Fig. 1 ist von der Schneekette im wesentlichen nur die äußere Seitenkette zu sehen. Auf der Innenseite des Reifens (nicht sichtbar) befindet sich im wesentlichen symmetrisch die innere Seitenkette. Die Enden der Seitenketten sind an zwei L-förmigen Bügeln 2 befestigt (im folgenden äußere Bügel genannt). Die L-Form des Bügels 2 erkennt man am besten im rechten Teil der Fig. 2. Es sind noch zusätzlich zwei weitere L-förmige Bügel 3 vorhanden, die im Verlauf der Länge der Seitenketten mit diesen verbunden sind (im folgenden innere Bügel genannt). Sämtliche Bügel 2, 3 sind auf einer Grundplatte 16 drehbar gelagert.

Die Montage ist in den Fig. 2 bis 6 schematisch dargestellt. Die Bügel 2, 3 werden zusammengeklappt über das Rad 4 gegeben; die Schneekette 1 hängt dabei nach vor als Bündel herunter (Fig. 2). Anschließend werden zuerst die äußeren Bügel 2 (Fig. 3) und anschließend auch die inneren Bügel 3 (Fig. 4) auseinandergefächert. Da die äußeren Bügel 2 länger als die inneren Bügel 3 sind, streifen die Bügel 2, 3 während dieses Vorganges nicht am Reifen 4. Erst wenn sie vollkommen gespannt sind (Fig. 6), liegen sie am Reifen 4 an. Der Mittelpunkt der Lagerungen der Bügel 2, 3 auf der Grundplatte 16 befindet sich dann außerhalb der Radachse.

Nachdem die Bügel 2, 3 auseinandergefächert wurden (Fig. 4), wird die Federeinrichtung gespannt. Dadurch wirkt auf die äußeren Bügel 2 eine Kraft in Richtung Pfeil 5 (Fig. 5). Wenn man nun mit dem Fahrzeug ein Stück in Richtung 6 fährt. (Fig. 6), klappen die äußeren Bügel 2 soweit auf, bis sie einander berühren. Damit ist die Kette fertig montiert. Es ist nicht notwendig, ein zweites Mal auszusteigen und nachzuspannen. Es ist dabei möglich, daß an einem Bügel ein Bolzen 17 und am anderen Bügel ein Haken 18 vorgesehen ist (Fig. 1), der hinter dem Bolzen einschnappt. In der in Fig. 1 dargestellten Anordnung muß der Haben gegen eine Federkraft entgegen dem Uhrzeigersinn drehbar sein und in der gezeigten Lage durch diese Feder an einen Anschlag gedrückt werden. Dadurch schnappt der Haken 18 ein, wenn die Bügel 2 einander berühren.

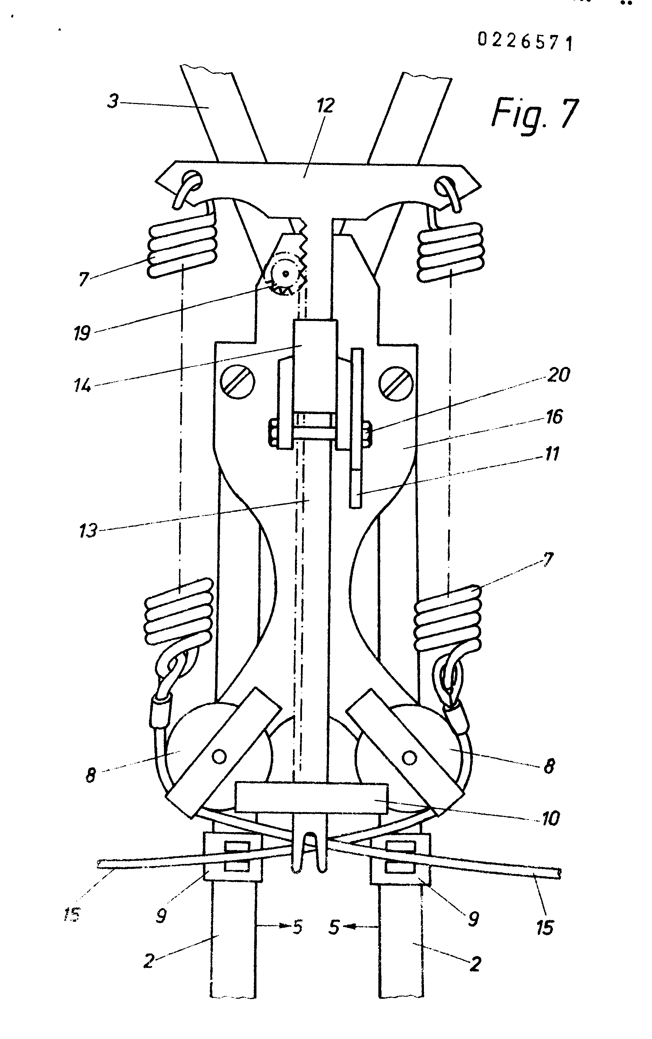

Anhand der Fig. 7 wird die Federeinrichtung näher beschrieben. Auf der Grundplatte 16, an der die Bügel 2, 3 angelenkt sind, sind auch zwei Rollen 8 drehbar gelagert. In einer mit der Grundplatte 16 verbundenen Führung 14 ist ein Führungsstab 13 gelagert. Er trägt an einem Ende einen Balken 12, in den zwei Federn 7 eingehängt sind. An den anderen Enden der Federn 7 ist jeweils ein Seil 15 befestigt. Dieses Seil 15 wird über die Rollen 8 zu den außeren Bügeln 2 geführt, auf diesen Bügeln befinden sich Gabeln 9, an denen das zu einer Schlaufe gebildete Ende des Seils 15 verankert werden kann.

Zum Spannen der Federn dient das Zahnrad 19, das mit Verzahnung des Führungsstabes 13 in Eingriff steht. Wird das Zahnrad 19 mittels einer nicht dargestellten Betätigungsvorrichtung entgegen dem Uhrzeigersinn gedreht, wird der Balken 12 nach oben geschoben und die Federn werden gespannt. Zur Fixierung des Balkens in der gespannten Lage dient der am Führungsstab befestigte Quersteg 10 zusammen mit dem Haken 11. Dieser Haken ist um eine Welle 20 drehbar. Wenn der Führungsstab 13 weit genug hinaufgedreht wurde, rastet der Haken 11 hinter dem Quersteg 10 ein und fixiert somit den Führungsstab 13 samt Balken 12. Zur Demontage der Kette muß der Haken 11 lediglich ein Stück um die Welle 20 verdreht werden, damit die Federn wieder entspannt werden können. Wenn die Federn gespannt sind, wirkt auf die äußeren Bügel 2 durch die Seile 15 eine Kraft in Richtung Pfeil 5, d.h., die äußeren Bügel werden aneinander gedrückt.

**Patentansprüche**

1. Schneekette mit einer inneren und einer äußeren Seitenkette und im wesentlichen L-förmigen Bügeln, wobei die innere und die äußere Seitenkette an den Enden und gegebenenfalls auch im Verlauf ihrer Länge jeweils an einem Schenkel eines Bügels befestigt ist, wobei die Bügel (2, 3) mit ihrem anderen Schenkel an einer Grundplatte (16) drehbar befestigt sind, dadurch gekennzeichnet, daß die Bügel (2), an denen die Enden der Seitenkettenbefestigt sind, mittels einer Federeinrichtung zueinander schwenkbar sind.

2. Schneekette nach Anspruch 1, dadurch gekennzeichnet, daß an den Bügeln (2), an denen die Enden der Seitenketten befestigt sind, ein automatischer Verschluß (17,18) vorgesehen ist, der die Bügel (2) miteinander verbindet, wenn sie einander berühren.

3. Schneekette nach Anspruch 1 oder 2, dadurch gekennzeichnet, daß die Bügel (2) an denen die Enden der Seitenketten befestigt sind, länger als die anderen Bügel (3) sind, sodaß in montiertem Zustand die Lagerung der Bügel auf der Grundplatte (16) außerhalb der Radmitte liegt.

4. Schneekette nach einem der Ansprüche 1 bis 3, dadurch gekennzeichnet, daß die Federeinrichtung aus einem verschiebbaren Balken (12), an dem zwei Zugfedern (7) befestigt sind, zwei auf der Grundplatte (16) drehbar gelagerten Rollen (8) und zwei auf den Bügeln (2), an denen die Enden der Seitenketten befestigt sind, befestigten Verankerungen (9) für Seile (15) besteht, wobei diese Seile (15) einerseits mit den freien Enden der Zugfedern (7) verbunden sind und anderseits über die Rollen (8) mit den jeweils am entsprechenden Bügel (2) befestigten Verankerungen (9) verbindbar sind.

5. Schneekette nach Anspruch 4, dadurch gekennzeichnet, daß der Balken eine feste Mutter aufweist, in die eine Spindel eingreift.

6. Schneekette nach Anspruch 4, dadurch gekennzeichnet, daß der Balken (12) mit einer Zahnstange (13) verbunden ist, in die ein Zahnrad (19) eingreift.

7. Schneekette nach Anspruch 4, dadurch gekennzeichnet, daß der Balken durch einen Flaschenzug verschiebbar ist.

8. Schneekette nach Anspruch 4, dadurch gekennzeichnet, daß der Balken mittels eines Spannbügels über einen Seilzug verschiebbar ist.

9. Schneekette nach einem der Ansprüche 4 bis 8, dadurch gekennzeichnet, daß der Balken (12) in der gespannten Position durch eine Arretiervorrichtung (10, 11) sicherbar ist.

Fig. 1

0226571

27·01·87

Fig. 2

Fig. 3

Fig. 4

Fig. 5

Fig. 6

0226571

Fig. 7